# EUROPÄISCHE PATENTANMELDUNG

(11) **EP 4 410 475 A1**
(43) Veröffentlichungstag der Anmeldung: **07.08.2024**
(21) Anmeldenummer: 23154506.2
(22) Anmeldetag: 01.02.2023
(51) Int. Cl.: B23Q 1/54

(54) **BEARBEITUNGSVORRICHTUNG ZUR BEARBEITUNG VON WERKSTÜCKEN SOWIE VERFAHREN**

(71) Anmelder: Klaus-Dieter Klement Verwaltungs GmbH, 06667 Weißenfels (DE)
(72) Erfinder: Klement, Alexander Timo, 52428 Jülich (DE)
(74) Vertreter: Andrejewski - Honke Patent- und Rechtsanwälte Partnerschaft mbB

(57) **Zusammenfassung**

Die Erfindung betrifft eine Bearbeitungsvorrichtung zur Bearbeitung von Werkstücken mit einer Trägervorrichtung (1) sowie einem über eine Stellvorrichtung an der Trägervorrichtung (1) angeordneten Bearbeitungskopf (9), wobei die Stellvorrichtung (2) zumindest drei in einer ersten horizontalen Richtung (H1) bewegbare Stelleinheiten (5, 6, 7) aufweist, welche über eine Gelenkverbindung (8) mit dem Bearbeitungskopf (9) verbunden sind. Erfindungsgemäß ist die Stellvorrichtung (2) in einer vertikalen Richtung (V) verfahrbar an der Trägervorrichtung (1) angeordnet, wobei eine erste Stelleinheit (5) vorgesehen ist, welche in vertikaler Richtung (V) oberhalb einer zweiten und einer dritten Stelleinheit (6, 7) angeordnet ist.

## Beschreibung

Die vorliegende Erfindung betrifft eine Bearbeitungsvorrichtung zur Bearbeitung von Werkstücken mit einer Trägervorrichtung sowie einem über eine Stellvorrichtung an der Trägervorrichtung angeordneten Bearbeitungskopf, wobei die Stellvorrichtung zumindest drei in einer ersten horizontalen Richtung bewegbare Stelleinheiten aufweist, welche über eine Gelenkverbindung mit dem Bearbeitungskopf verbunden sind.

Insbesondere bezieht sich die Erfindung auf Bearbeitungsvorrichtungen aus dem Bereich der Werkzeugtechnik, wobei im Rahmen der Erfindung mit einer Behandlung der Werkstücke jedwede Art der Beeinflussung der Werkstücke selbst gemeint ist. Insbesondere kann es sich beispielsweise um eine spanabhebende Bearbeitung handeln, in welcher Material z.B. durch Drehen oder Fräsen von dem Werkstück abgetragen wird. Darüber hinaus kann eine Bearbeitung auch das Fügen von Werkstücken umfassen. Dies kann beispielsweise durch Schweißen erfolgen.

Aus dem Stand der Technik sind Bearbeitungsvorrichtungen bekannt, bei denen das Werkzeug in einem verstellbaren Bearbeitungskopf angeordnet ist. Besonders hervorzuheben sind in diesem Zusammenhang sogenannte Gabelköpfe, in denen der Bearbeitungskopf schwenkbar gehalten wird, sodass entsprechend der Bearbeitungskopf innerhalb des Gabelkopfes je nach gewünschter Bearbeitungsposition durch Verschwenken eingestellt werden kann. Zusätzlich kann darüber hinaus auch der Gabelkopf selbst verstellbar ausgebildet sein, sodass sich ein hohes Maß an Flexibilität ergibt. Hierdurch ist es möglich, dass mit nur einem Bearbeitungskopf eine möglichst großflächige Bearbeitung von Werkstücken erfolgen kann, sodass möglichst viele Bearbeitungsschritte ohne Wechsel der Bearbeitungsvorrichtung vorgenommen werden können.

Bei derartigen Gabelköpfen sind die Schwenkachsen im Vorfeld festgelegt, sodass der Bearbeitungsbereich ebenfalls gewissen Beschränkungen unterliegt. Vor diesem Hintergrund haben sich in der Praxis sogenannte Parallelkinematikköpfe herausgebildet, bei denen der Bearbeitungskopf gelenkig an üblicherweise drei linear verfahrbaren Stelleinheiten angebunden ist. Entsprechend erfolgt nicht nur ein Verfahren des Bearbeitungskopfes entlang einer vorgegebenen horizontalen Richtung. Vielmehr kann durch Einstellen des Fahrweges der einzelnen Stelleinheiten auch der Bearbeitungskopf gezielt verkippt werden, sodass sich eine möglichst hohe Flexibilität und Einstellgeschwindigkeit des Bearbeitungskopfes ergibt.

Eine solche Ausgestaltung ist beispielsweise aus der EP 1 123 175 B1 bekannt, wobei eine erste Stelleinheit unterhalb des Bearbeitungskopfes und zwei weitere Stelleinheiten oberhalb des Bearbeitungskopfes angeordnet sind. Eine solche Ausgestaltung hat sich grundsätzlich bewährt, wobei die Bewegung der Stelleinrichtung bzw. des Bearbeitungskopfes ausschließlich über die Bewegung der Stelleinheiten bewirkt wird. Entsprechend ist auch hier der Einsatzbereich limitiert.

Der vorliegenden Erfindung liegt daher die Aufgabe zugrunde, eine Bearbeitungsvorrichtung anzugeben, welche sich einerseits über einen einfachen Aufbau und zugleich über einen großen Bearbeitungsbereich sowie eine hohe Bearbeitungsgeschwindigkeit auszeichnet.

Gegenstand und Lösung dieser Aufgabe ist eine Bearbeitungsvorrichtung gemäß Patentanspruch 1. Demnach ist erfindungsgemäß vorgesehen, dass die Stellvorrichtung in einer vertikalen Richtung verfahrbar an der Trägervorrichtung angeordnet ist und wobei eine erste Stelleinheit vorgesehen ist, welche in vertikaler Richtung oberhalb einer zweiten und einer dritten Stelleinheit angeordnet ist.

Durch die verfahrbare Anordnung der Stellvorrichtung an der Trägervorrichtung kann diese und damit auch der Bearbeitungskopf entlang der Vertikalen bewegt und dessen Position gezielt eingestellt werden. Hierdurch ist es möglich, unabhängig von der vertikalen Erstreckung der zu bearbeitenden Werkstücke eine Behandlung zu ermöglichen. Entsprechend können auch Werkstücke, welche entlang ihrer zu bearbeitenden Fläche unterschiedliche Höhenprofile aufweisen, flexibel und innerhalb nur einer Bearbeitungsvorrichtung bearbeitet werden. Darüber hinaus hat sich gezeigt, dass durch den Einsatz von einer zweiten und dritten Stelleinheit, welche unterhalb der ersten Stelleinheit angeordnet sind, sich besondere Vorteile hinsichtlich der Steifigkeit der gesamten Bearbeitungsvorrichtung ergeben. Gerade durch die Verstellung der Stelleinrichtung in vertikaler Richtung ist es erforderlich, eine möglichst hohe Steifigkeit der gesamten Bearbeitungsvorrichtung zu gewährleisten, damit die Werkstücke mit geringen Fertigungstoleranzen bearbeitet werden können. Die Steifigkeit wird insbesondere dadurch in vorteilhafter Weise erhöht, dass der Schwerpunkt nach unten verlagert wird.

Zugleich bewirkt die Anordnung der Stelleinheiten auch, dass diese derart angeordnet werden können, dass der Bearbeitungskopf mit einem innerhalb des Bearbeitungskopfes angeordneten Werkzeug zumindest abschnittsweise zwischen der zweiten und der dritten Stelleinheit verkippt werden kann. Somit ist gerade im Falle einer Bearbeitung von oben herab ein großer Bearbeitungswinkel möglich.

Gemäß einer bevorzugten Weiterbildung der Erfindung sind die Stelleinheiten parallel zueinander entlang der ersten horizontalen Richtung bewegbar. Entsprechend erfolgt eine Verstellung des Bearbeitungskopfes durch Verfahren der Stelleinheiten entlang einer gemeinsamen ersten horizontalen Richtung. Werden hierbei die Stelleinheiten gemeinsam verfahren, so erfolgt auch ausschließlich ein Verfahren des Bearbeitungskopfes entlang der ersten horizontalen Richtung. Sofern jedoch die einzelnen Stelleinheiten in unterschiedlicher Art und Weise entlang der ersten horizontalen Richtung verfahren werden, so wird der Bearbeitungskopf verschwenkt. Selbstverständlich ist es aber auch möglich, dass durch unterschiedliches Verfahren der Stelleinheiten zusätzlich zum Verschwenken des Bearbeitungskopfes auch ein Verfahren in der ersten horizontalen Richtung bewirkt wird.

Eine Weiterbildung der Erfindung sieht ferner vor, dass die Stelleinheiten jeweils aus einem Stellschlitten und einem gelenkig mit dem Stellschlitten verbundenen Stellbügel ausgebildet sind, wobei der Stellbügel an den Bearbeitungskopf anschließt. Gemäß einer solchen Ausgestaltung ist vorgesehen, dass die Stellschlitten in einer Linearführung geführt werden können, wobei die einzelnen Linearführungen in einem Grundgehäuse angeordnet sind. Die Linearführungen und die darin verfahrbar angeordneten Stellschlitten bewirken ausschließlich eine Bewegung entlang der ersten horizontalen Richtung, wobei über die gelenkig angebundenen Stellbügel ein Verschwenken des Bearbeitungskopfes gegenüber den zugeordneten Linearführungen bewirkt werden kann. Hierbei ist insbesondere vorgesehen, dass die Stellbügel über eine Gelenkachse an den Stellschlitten anschließen. Die Gelenkachse ist für jede Stelleinheit jeweils senkrecht zur ersten horizontalen Richtung angeordnet.

Der Stellbügel selbst ist hinsichtlich seiner Form nicht beschränkt. Beispielsweise kann es sich um ein einfaches gerades Bauteil handeln. Insbesondere ist allerdings vorgesehen, dass der Stellbügel eine Abwinklung aufweist oder bogenförmig ausgebildet ist.

Eine Weiterbildung der Erfindung sieht vor, dass die Stellschlitten der zweiten und der dritten Stelleinheit in vertikaler Richtung in derselben Ebene angeordnet sind. Hierbei bezieht sich die Ebene auf eine Ebene bezüglich der Stelleinrichtung oder des Bearbeitungskopfes. Insofern befindet sich die erste Stelleinheit in einer ersten Ebene und die zweite und dritte Stelleinheit befinden sich in einer gemeinsamen zweiten Ebene, wobei die erste Ebene stets oberhalb der zweiten Ebene angeordnet ist.

Gemäß einer solchen Ausgestaltung bewirkt ein gemeinsames Verfahren der zweiten und der dritten Stelleinheit ein Verschwenken des Bearbeitungskopfes, wobei die Schwenkachse entlang einer zweiten horizontalen Richtung verläuft, welche senkrecht zur zuvor genannten ersten horizontalen Richtung und zur vertikalen Richtung angeordnet ist. Die erste horizontale Richtung ist die Richtung, entlang der die Stelleinheiten bzw. die Stellschlitten verfahrbar angeordnet sind. Im Gegenzug bewirkt ein ausschließliches Verfahren der ersten Stelleinheit oder ein ausschließliches Verfahren der zweiten und der dritten Stelleinheit, dass ein Verschwenken des Bearbeitungskopfes um die zweite horizontale Richtung erfolgt, wobei bei einem Verfahren der ersten Stelleinheit der Bearbeitungskopf nach unten verschwenkt wird, während bei einem Verfahren der zweiten und der dritten Stelleinheit der Bearbeitungskopf nach oben verschwenkt wird.

Eine Weiterbildung der Erfindung sieht ferner vor, dass die Stellbügel jeweils zueinander äquidistant an den Bearbeitungskopf anschließen. Eine solche Ausgestaltung führt dazu, dass die Anbindungspunkte, an denen die Stellbügel bzw. die Stelleinheiten an den Bearbeitungskopf anschließen, ein gleichschenkliges Dreieck bilden. Somit sind die Anbindungspunkte bei insgesamt drei Stelleinheiten jeweils um 120 ° versetzt zueinander angeordnet.

Gemäß einer solchen Ausgestaltung ist es auch von besonderem Vorteil, wenn nicht nur die Anbindung der Stelleinheiten an den Bearbeitungskopf äquidistant erfolgt. Vielmehr sieht eine bevorzugte Ausgestaltung vor, dass die Stelleinheiten äquidistant zueinander angeordnet sind. Gemäß einer solchen Ausgestaltung sind dann auch die Stelleinheiten, insbesondere die Stellschlitten sowie die zugeordneten Linearführungen jeweils um 120 ° versetzt zueinander angeordnet.

Eine besonders bevorzugte Ausgestaltung sieht vor, dass die Stelleinheiten, insbesondere die Stellbügel, jeweils über ein Kugelgelenk mit dem Bearbeitungskopf verbunden sind. Eine solche Ausgestaltung ermöglicht es, den Bearbeitungskopf möglichst flexibel und frei zu bewegen, sodass insbesondere die Bewegungen der Stelleinheiten zueinander nicht limitiert sind. Eine solche Ausgestaltung ermöglicht eine flexible Bearbeitung der Werkstücke in einem großen Bearbeitungsbereich.

Den Stelleinheiten ist jeweils bevorzugt eine Antriebseinheit zugeordnet, über die eine Bewegung in horizontale Richtung ermöglicht werden kann. Insbesondere ist vorgesehen, dass die Antriebseinheiten als Elektromotor, insbesondere als Servo-Motor, ausgebildet sind. Für ein hohes Maß an Flexibilität kann jede Antriebseinheit separat angesteuert werden. In diesem Zusammenhang ist vorgesehen, dass die Antriebseinheiten bevorzugt mit einer Steuereinheit verbunden sind. Die Steuereinheit ermittelt dann auf Basis der Bearbeitungsgeometrie den Ablauf und die Stellung des Bearbeitungskopfes und bewirkt ein Verstellen der einzelnen Stelleinheiten durch Aktivieren der jeweiligen Antriebseinheit. Die Antriebseinheit ist hierbei so ausgebildet, dass jeweils ein Verfahren in horizontaler Richtung und in eine entgegengesetzte Richtung ermöglicht wird.

Besonders bevorzugt ist in diesem Zusammenhang eine Ausgestaltung, bei der die Antriebseinheiten jeweils über eine Gewindespindel rotierbar in eine Gewindeaufnahme des Stellschlittens eingreifen. Die Gewindespindel ist bevorzugt unmittelbar mit einer Motorwelle der Antriebseinrichtung verbunden und gereift in die Gewindeaufnahme ein, welche mit einem Innengewinde ausgebildet ist. Durch Drehung der Motorwelle in eine erste Richtung wird dann ein Verfahren der jeweiligen Stelleinheit in die erste horizontale Richtung bewirkt, während eine entgegengesetzte Drehung ein Bewegen des Stellschlittens in einer der ersten horizontalen Richtung entgegengesetzten Richtung bewirkt wird.

Gemäß einer solchen Ausgestaltung kann es auch zweckmäßig sein, dass die jeweiligen Stellbügel eine mittige Durchbrechung aufweisen, in der die jeweils zugeordnete Gewindespindel durchgeführt werden kann. Gerade bei einer abgewinkelten oder bogenförmigen Ausgestaltung verläuft der Stellbügel bevorzugt in einem vollständig eingefahrenen Zustand der Stelleinheiten über einen gewissen Bereich im Wesentlichen parallel zur ersten horizontalen Richtung. Zugleich erstrecken sich aber auch die Gewindespindeln entlang der horizontalen Richtung, sodass es für eine möglichst platzsparende Anordnung der Stelleinrichtung aufgrund der Durchbrechungen ermöglicht wird, dass die Stellbügel und die Gewindespindel zumindest abschnittsweise ineinandergreifen, ohne dass hierdurch die Bewegung der Stellschlitten behindert wird.

Eine besonders bevorzugte Ausgestaltung sieht vor, dass der Bearbeitungskopf eine rotierbar antreibbare Werkzeugspindel aufweist. Entsprechend ist es möglich, ein Werkzeug in der Werkzeugspindel anzuordnen, welches eine Bearbeitung der Werkstücke durch Rotation bewirkt. Die Werkzeugspindel kann hierbei eine Werkzeugaufnahme aufweisen, in der verschiedene Werkzeuge lösbar angeordnet werden können. Hierfür kann die Werkzeugspindel über ein Spannsystem verfügen, welches dafür ausgebildet ist, ein Werkzeug innerhalb der Werkzeugspindel zu fixieren und zugleich durch Aufbringen einer Spannkraft vorzuspannen. Bei den Werkzeugen handelt es sich insbesondere um Fräser oder Bohrer.

Gemäß einer besonders bevorzugten Ausgestaltung ist ein Schweißstift als Werkzeug in der Werkzeugspindel angeordnet. Ein solcher Schweißstift ist insbesondere vorgesehen, um mithilfe der Bearbeitungsvorrichtung ein Verschweißen von zwei Werkstücken miteinander zu bewirken. Der Werkzeugstift ist an seiner Oberfläche üblicherweise mit einem Profil ausgebildet und wird im Zuge der Bearbeitung auf ein Werkstück mit einem gewissen Druck angepresst. Durch Rotation wird sodann Reibungswärme am Werkstück erzeugt, so dass sich dieses lokal aufheizt. Hierdurch ist es möglich, zwei Werkstücke miteinander stoffschlüssig zu fügen. Ein solches Schweißverfahren wird auch als Reibrührschweißen bezeichnet.

Unabhängig von der konkreten Ausgestaltung des Werkzeuges ist vorgesehen, dass die Stellvorrichtung in vertikaler Richtung zwischen 500 und 4000 mm, insbesondere zwischen 1000 und 3500 mm, bewegbar ist. Zugleich können die Stelleinheiten jeweils in Horizontalrichtung zwischen 100 und 300 mm verfahrbar ausgebildet sein.

Eine derartige Ausgestaltung zeichnet sich insbesondere dadurch aus, dass der Bearbeitungskopf möglichst schnell in die gewünschte Position bewegt werden kann, da allein durch das Verfahren dreier Stelleinheiten entlang einer gemeinsamen Richtung ein Verfahren und Verschwenken des Bearbeitungskopfes ermöglicht wird. Die Stelleinheiten sind hierbei so ausgebildet, dass diese mit einer Geschwindigkeit zwischen 50 und 120 m/min, insbesondere zwischen 60 und 100 m/min verfahren werden können.

Zusätzlich kann es vorgesehen sein, dass die Trägervorrichtung entlang der zweiten Horizontalrichtung bewegbar ist. Somit kann die Stelleinrichtung grundsätzlich entlang einer von der zweiten horizontalen Richtung und der vertikalen Richtung aufgespannten Ebene verfahren werden, wobei durch die Bewegung der Stelleinheiten ein Verfahren entlang der ersten horizontalen Richtung sowie ein Verschwenken des Bearbeitungskopfes ermöglicht wird.

Gegenstand der Erfindung ist ferner ein Verfahren zum Bearbeiten von Werkstücken mit einer erfindungsgemäßen Bearbeitungsvorrichtung, wobei zumindest ein Werkstück zugeführt und durch Rotation der Werkzeugspindel mit einem der Werkzeugspindel angeordneten Werkzeug bearbeitet wird. Die Bearbeitung kann beispielsweise spanabhebend erfolgen, wobei dann das Werkzeug als Fräser oder als Bohrer ausgebildet ist.

Ferner ist es vorgesehen, dass der Werkzeugkopf bevorzugt vor und/oder während der Bearbeitung durch Verfahren zumindest einer der Stelleinheiten bewegt wird. Hierdurch kann das Werkzeug vor der Bearbeitung in die vorgesehene Position bewegt werden. Durch Bewegung der Stelleinheiten oder darüber hinaus auch der Stellvorrichtung selbst ist während der Bearbeitung eine flächige Bearbeitung des Werkstückes möglich.

Eine besonders bevorzugte Ausgestaltung des Verfahrens sieht vor, dass zumindest zwei Werkstücke zugeführt werden, welche an einem Verbindungsabschnitt zumindest teilweise auf- oder aneinander liegen, wobei das als Schweißstift ausgebildete Werkzeug an einem der Werkstücke in dem Verbindungsabschnitt anliegt und durch Rotation des Schweißstiftes die Werkstücke miteinander verbunden werden.

Das als Reibrührschweißen bezeichnete Verfahren wurde bereits zuvor eingehend erläutert, wobei durch die Rotation des Schweißstiftes die Werkstücke lokal derart aufgeheizt werden, dass sich eine stoffschlüssige Verbindung zwischen den Werkstücken einstellt. Entsprechend ist ein zusätzliches Schweißmaterial, welches die Werkstücke miteinander verbindet, nicht erforderlich. Durch Bewegung des Bearbeitungskopfes kann dann nicht nur eine punktuelle Verbindung sondern eine Schweißnaht erzeugt werden, welche sich eindimensional entlang der Werkstücke erstreckt.

Im Folgenden wird die Erfindung anhand eines Ausführungsbeispiels näher erläutert. Es zeigen:
- Fig. 1: eine isometrische Darstellung der erfindungsgemäßen Bearbeitungsvorrichtung
- Fig. 2A, 2B, 2C: unterschiedliche Stellungen der Stelleinheiten
- Fig. 3: eine seitliche Ansicht der erfindungsgemäßen Bearbeitungsvorrichtung
- Fig. 4: eine alternative Ausgestaltung mit verfahrbarer Trägervorrichtung

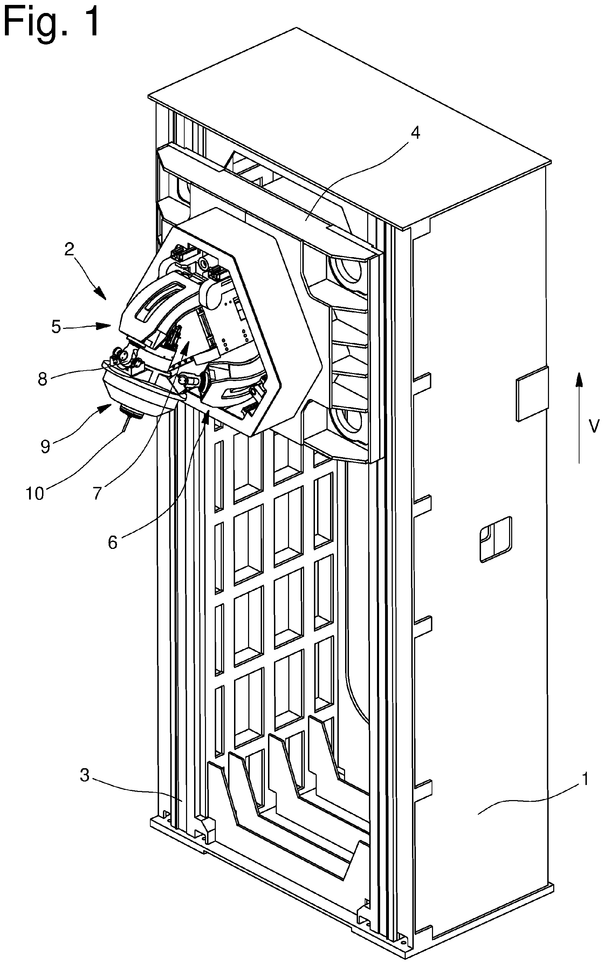

Die Fig. 1 zeigt die erfindungsgemäße Bearbeitungsvorrichtung, welche gemäß der dargestellten Ausführungsform als eine Bearbeitungsvorrichtung für das sogenannte Reibrührschweißen ausgebildet ist.

Die Bearbeitungsvorrichtung weist eine Trägervorrichtung 1 sowie eine Stellvorrichtung 2 auf, welche in einer Vertikalrichtung V verfahrbar an der Trägervorrichtung 1 angeordnet ist. Hierzu weist die Trägervorrichtung 1 eine Vertikalführung 3 auf, wobei die Stellvorrichtung über einen Vertikalschlitten 4 an der Trägervorrichtung 1 angeordnet und zugleich entlang der Vertikalführung 3 verfahrbar ist.

Die Stellvorrichtung weist darüber hinaus insgesamt drei Stelleinheiten 5, 6, 7 auf, welche jeweils über eine Gelenkverbindung 8 an einen Bearbeitungskopf 9 anschließen.

Der Bearbeitungskopf 9 weist eine rotierbar antreibbare Werkzeugspindel auf, wobei in einer Werkzeugaufnahme der Werkzeugspindel ein Schweißstift 10 angeordnet ist, über den ein Verschweißen von Werkstücken miteinander erfolgen kann.

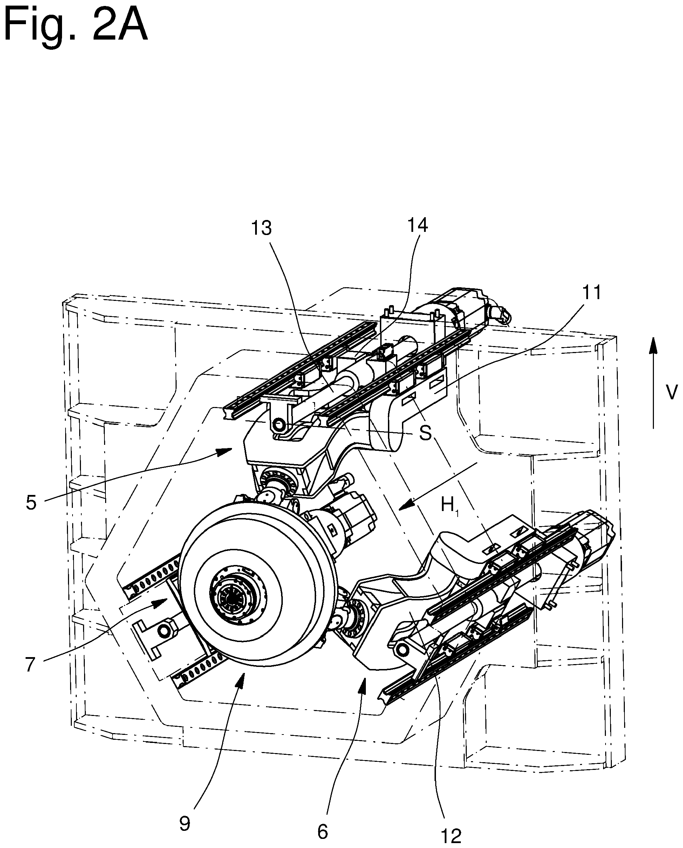

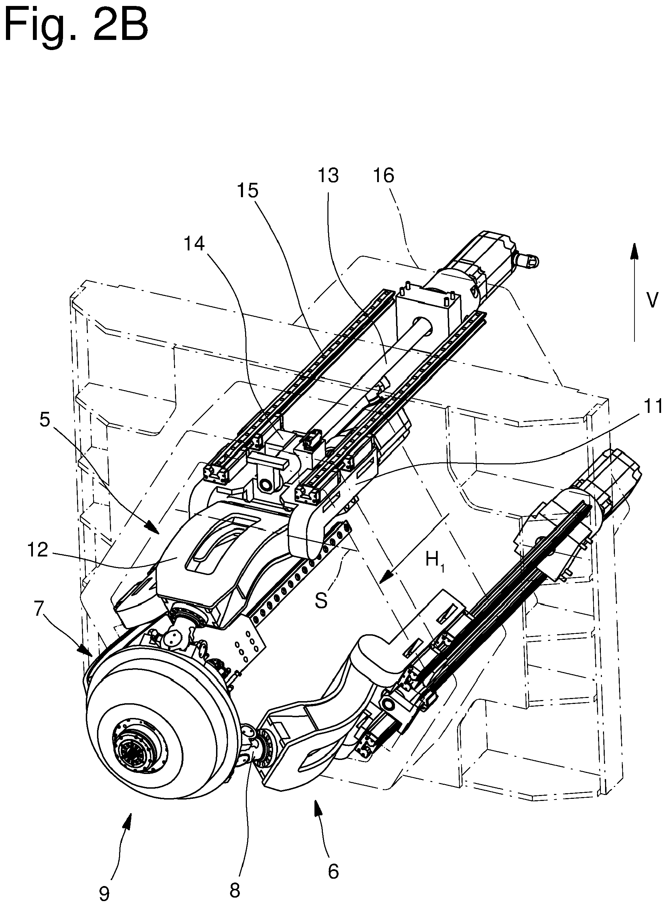

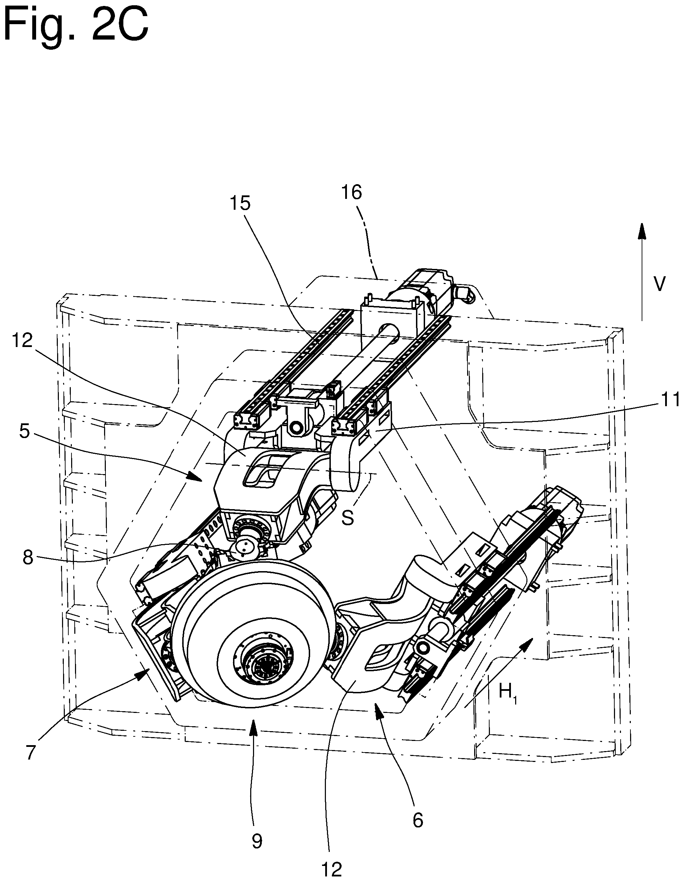

Im Rahmen der Erfindung ist es von wesentlicher Bedeutung, dass der Bearbeitungskopf 9 sowie die Stellvorrichtung 2 entlang der Vertikalrichtung V verfahrbar sind. In diesem Zusammenhang ist auch die Funktionsweise der Stellvorrichtung 2 von besonderer Bedeutung. Diese geht insbesondere aus den Figuren 2A, 2B, 2C hervor.

Wie bereits zuvor erläutert, sind insgesamt drei Stelleinheiten 5, 6, 7 vorgesehen, wobei eine erste Stelleinheit 5 in vertikaler Richtung V oberhalb der zweiten Stelleinheit 6 und oberhalb der dritten Stelleinheit 7 angeordnet ist. Jede der Stelleinheiten 5, 6, 7 verfügt über einen Stellschlitten 11 sowie einen gelenkig daran angebundenen Stellbügel 12, welcher im Wesentlichen bogenförmig ausgebildet ist. Die gelenkige Anbindung des Stellbügels 12 an den Stellschlitten 11 erfolgt jeweils in einer Schwenkachse S, wobei alle Stelleinheiten 5, 6, 7 identisch ausgebildet sind, sodass die vorstehenden Erläuterungen für alle Stelleinheiten 5, 6, 7 gemeinsam gelten.

Die Bewegung der Stelleinheiten 5, 6, 7 erfolgt über eine Gewindespindel 13, welche in eine Gewindeaufnahme 14 eingreift. Durch Rotation der Gewindespindel 13 werden die einzelnen Stelleinheiten 5, 6, 7 bzw. die Stellschlitten 11 entlang einer ersten horizontalen Richtung H1 bewegt, wobei gemäß der Fig. 2A sämtliche Stelleinheiten 5, 6, 7 in einer vollständig eingezogenen Positionen dargestellt sind.

Gemäß der Fig. 2B sind sodann sämtliche Stelleinheiten 5, 6, 7 in einer bezüglich der ersten horizontalen Richtung H1 maximal ausgefahrenen Position dargestellt. Für eine diesbezügliche Bewegung sind die Stellschlitten 11 jeweils in einer Linearführung 15 angeordnet, welche wiederum an einem Grundkörper 16 befestigt ist.

Die Stellschlitten 11 sowie die Linearführungen 15 sind darüber hinaus bezogen auf den Grundkörper 16 um 120 ° versetzt zueinander angeordnet und schließen darüber hinaus jeweils versetzt in einem Winkel von 120 ° über den Stellbügel 12 und die Gelenkverbindung 8 versetzt an den Bearbeitungskopf 9 an. Die Gelenkverbindung 8 ist als Kugelgelenk ausgebildet. Dies ist insbesondere erforderlich, um eine möglichst flexible Bewegung des Bearbeitungskopfes 9 zu ermöglichen.

Hierzu ist beispielsweise vorgesehen, dass die einzelnen Stelleinheiten 5, 6, 7 in unterschiedliche Art und unabhängig voneinander verfahren werden können, sodass der Bearbeitungskopf 9 nicht nur entlang der ersten horizontalen Richtung H1 verfahren werden kann, sondern zugleich auch ein Verschwenken möglich wird. Hierzu werden die Stellschlitten 11 in unterschiedliche Positionen entlang der Linearführung 15 gebracht.

Die zweite und die dritte Stelleinheiten 6, 7 sind bezüglich der vertikalen Richtung V stets in einer gemeinsamen Ebene angeordnet. Dies ermöglicht es, dass der Bearbeitungskopf 9 zumindest abschnittsweise zwischen der zweiten und der dritten Stelleinheit 6, 7 hindurchschwenken kann. Hierdurch ergibt sich einerseits ein möglichst niedriger Schwerpunkt der gesamten Vorrichtung. Zugleich ist aber auch ein besonders flexibles Verschwenken des Bearbeitungskopfes 9 möglich.

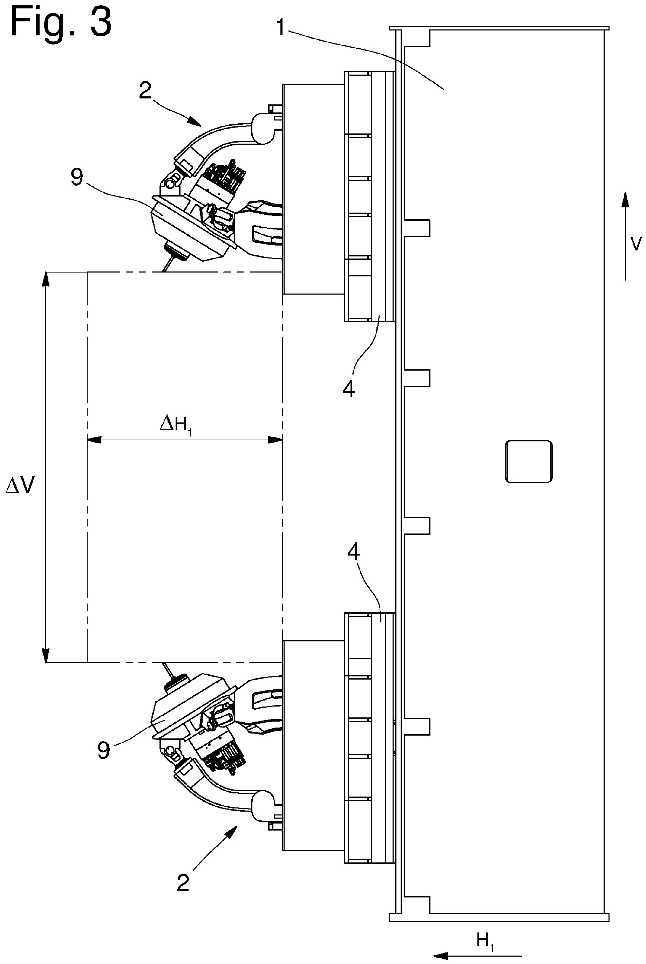

Insgesamt ergibt sich ein großer Bearbeitungsbereich, wobei gemäß der Fig. 3 die Stelleinrichtung 2 mit dem Bearbeitungskopf 9 einmal in einer maximalen vertikalen Position und einmal in einer minimalen vertikalen Position angeordnet ist. Die Stelleinheiten können insbesondere zwischen 500 und 4000 mm bewegt werden, sodass sich ein vertikaler Bearbeitungsbereich ΔV zwischen 800 und 3500 mm sowie ein horizontaler Bearbeitungsbereich ΔH1 zwischen 400 und 1200 mm einstellt.

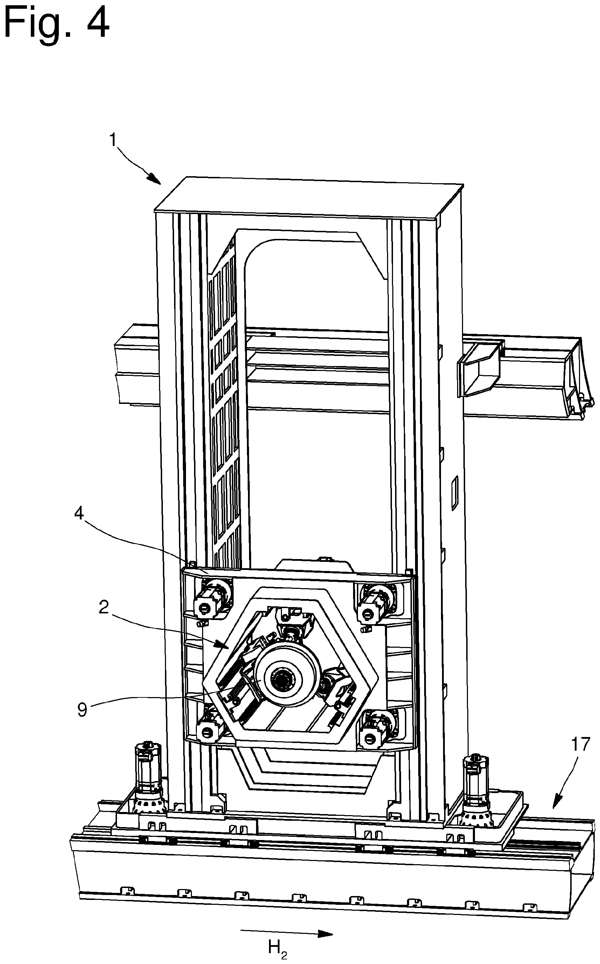

Die Fig. 4 zeigt die erfindungsgemäße Ausgestaltung, wobei die Trägervorrichtung 1 selbst über eine Horizontallinearführung 17 entlang einen zweiten horizontalen Richtung H2 bewegbar ist. Hierdurch wird der Bearbeitungsbereich zusätzlich vergrößert.

## Patentansprüche

1. Bearbeitungsvorrichtung zur Bearbeitung von Werkstücken mit einer Trägervorrichtung (1) sowie einem über eine Stellvorrichtung an der Trägervorrichtung (1) angeordneten Bearbeitungskopf (9), wobei die Stellvorrichtung (2) zumindest drei in einer ersten horizontalen Richtung (H1) bewegbare Stelleinheiten (5, 6, 7) aufweist, welche über eine Gelenkverbindung (8) mit dem Bearbeitungskopf (9) verbunden sind,
**dadurch gekennzeichnet, dass**
die Stellvorrichtung (2) in einer vertikalen Richtung (V) verfahrbar an der Trägervorrichtung (1) angeordnet ist und wobei eine erste Stelleinheit (5) vorgesehen ist, welche in vertikaler Richtung (V) oberhalb einer zweiten und einer dritten Stelleinheit (6, 7) angeordnet ist.

2. Bearbeitungsvorrichtung nach Anspruch 1, **dadurch gekennzeichnet, dass** die Stelleinheiten (5, 6, 7) parallel zueinander entlang der horizontalen Richtung (H1) bewegbar sind.

3. Bearbeitungsvorrichtung nach Anspruch 3, **dadurch gekennzeichnet, dass** die Stelleinheiten (5, 6, 7) jeweils aus einem Stellschlitten (11) und einem gelenkig mit dem Stellschlitten (11) verbundenen Stellbügel (12) ausgebildet sind, wobei der Stellbügel (12) an den Bearbeitungskopf (9) anschließt.

4. Bearbeitungsvorrichtung nach Anspruch 3, **dadurch gekennzeichnet, dass** die Stellschlitten (11) der zweiten und der dritten Stelleinheit (5, 6, 7) in vertikaler Richtung (V) in derselben Ebene angeordnet sind.

5. Bearbeitungsvorrichtung nach einem der Ansprüche 1 bis 4, **dadurch gekennzeichnet, dass** die Stellbügel (12) jeweils zueinander äquidistant an den Bearbeitungskopf (9) anschließen.

6. Bearbeitungsvorrichtung nach Anspruch 5, **dadurch gekennzeichnet, dass** die Stelleinheiten (5, 6, 7) äquidistant zueinander angeordnet sind.

7. Bearbeitungsvorrichtung nach einem der Ansprüche 1 bis 6, **dadurch gekennzeichnet, dass** die Stelleinheiten (5, 6, 7), insbesondere die Stellbügel (12), jeweils über ein Kugelgelenk mit dem Bearbeitungskopf (9) verbunden sind.

8. Bearbeitungsvorrichtung nach einem der Ansprüche 1 bis 8, **dadurch gekennzeichnet, dass** den Stelleinheiten (5, 6, 7) jeweils eine Antriebseinheit, insbesondere ein Elektromotor zugeordnet ist.

9. Bearbeitungsvorrichtung nach Anspruch 8, dass die Antriebseinheiten jeweils über eine Gewindespindel (13) rotierbar in eine Gewindeaufnahme (14) des Stellschlittens (11) eingreifen.

10. Bearbeitungsvorrichtung nach einem der Ansprüche 1 bis 8, **dadurch gekennzeichnet, dass** der Bearbeitungskopf (9) eine rotierbar antreibbare Werkzeugspindel aufweist.

11. Bearbeitungsvorrichtung nach Anspruch 9, **dadurch gekennzeichnet, dass** ein Schweißstift (10) in der Werkzeugspindel angeordnet ist.

12. Bearbeitungsvorrichtung nach einem der Ansprüche 1 bis 12, **dadurch gekennzeichnet, dass** die Trägervorrichtung (1) entlang einer zweiten horizontalen Richtung (H2) bewegbar ist.

13. Verfahren zum Bearbeiten von Werkstücken mit einer Bearbeitungsvorrichtung nach einem der Ansprüche 1 bis 12, wobei zumindest ein Werkstück zugeführt und durch Rotation der Werkzeugspindel mit einem in der Werkzeugspindel angeordneten Werkzeug bearbeitet wird.

14. Verfahren nach Anspruch 14, wobei der Bearbeitungskopf (9) vor und/oder während der Bearbeitung durch Verfahren zumindest einer der Stelleinheiten (5, 6, 7) bewegt wird.

15. Verfahren nach Anspruch 14 oder 15, wobei zumindest zwei Werkstücke zugeführt werden, welche in einem Verbindungsabschnitt zumindest teilweise auf- oder aneinander liegen, wobei das als Schweißstift (10) ausgebildete Werkzeug an einem der Werkstücke in dem Verbindungsabschnitt anliegt und durch Rotation die Werkstücke miteinander verbunden werden.
